# EUROPÄISCHE PATENTSCHRIFT

(11) **EP 0 949 431 B1**
(45) Veröffentlichungstag und Bekanntmachung des Hinweises auf die Patenterteilung: **24.04.2002**
(21) Anmeldenummer: 99102442.3
(22) Anmeldetag: 09.02.1999
(51) Int. Cl.: F16D 65/12

(54) **Bremsscheibe für ein Kraftfahrzeug**
Brake disc for motor vehicle
Disque de frein pour véhicule à moteur

(30) Priorität: 11.04.1998 DE 19816381
(43) Veröffentlichungstag der Anmeldung: 13.10.1999
(73) Patentinhaber: Dr.Ing. h.c.F. Porsche Aktiengesellschaft, 70435 Stuttgart (DE)
(72) Erfinder: Martin, Roland, 71287 Weissach (DE)

(56) Entgegenhaltungen:
- EP-A- 0 699 845
- EP-A- 0 717 214
- WO-A-95/30841
- DE-A- 1 813 850

## Beschreibung

Die Erfindung bezieht sich auf eine Bremsscheibe für ein Kraftfahrzeug nach dem Oberbegriff des Anspruchs 1.

Aus der DE-OS 1 940 669 ist eine Bremsscheibe mit zwei Scheibenelementen bekannt, die zur Verbindung Haltemittel an zwischenliegenden Rippen aufweisen, welche die Luftkanäle bilden.

Aus der DE-A-18 13 850 ist eine Bremsscheibe mit zwei zueinander parallel liegenden Reibringen bekannt, die innenseitig gegenüberstehende Rippen aufweisen, welche über eine schwalbenschwanzartige oder sägezahnförmige Verbindung miteinander verbunden sind, wobei diese Verbindung punktuell ein einziges Mal je Rippe vorgesehen ist. Desweiteren ist aus der EP-A-0 699 845 eine Bremsscheibenanordnung mit zueinander parallel liegenden Ringsegmenten bekannt, die über Stifte miteinander verbunden sind, welche punktuell an den Ringsegmenten angeordnet sind. Ferner ist aus der EP-A-717 214 eine Bremsscheibe bekannt, die aus zwei einzel herstellbaren Reibringen besteht, die innenseitig gegenüberstehende Rippen aufweist, welche miteinander z.B. durch eine Hochtemperaturlötung oder eine Klebung miteinander verbindbar sind.

Die Aufgabe der Erfindung besteht darin, eine Bremsscheibe zu schaffen, die zwei, insbesondere aus einem Faserverbund-Werkstoff bestehende Scheibenelemente umfassen, die in einfacher Weise ohne Verwendung von Haltemitteln miteinander verbindbar sind.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß die Scheibenhälften der Bremsscheibe aus Faserverbund-Werkstoff mit einer speziellen Ausbildung der Verbindungsflächen an den Stirn- und/oder der Seitenflächen der Rippen für die Luftkanäle ausgeführt sind. Diese Verbindungsflächen bilden eine sog. Einhakoder Einhängverbindung, wodurch das Zusammenfügen der beiden Scheibenelemente zueinander zentriert und formschlüssig erfolgen kann.

Hierzu sind die Verbindungsflächen der einzelnen Rippen jedes Scheibenelementes mit ineinander steckbaren Absetzungen versehen.

Die Absetzungen weisen etwa eine Tiefe entsprechend einer halben Rippendicke auf und sie endet vorzugsweise mit einem Abstand zur zentralen Öffnung des Bremsscheibenrings bzw. zum Rippengrund.

Die Absetzungen in den Rippen können wechselnd derart angeordnet sein, daß wenigstens einer linksseitigen Absetzung eine rechtsseitige Absetzung folgt. Auch können mehrere gleiche linksseitige Absetzungen mehreren gleichen rechtsseitigen Absetzungen folgen.

Durch diese wechselseitige Anordnung der Absetzungen sind die Scheibenelemente zum Verbinden zueinander genau anzuordnen. Die Verbindung der Rippen erfolgt beispielsweise in einem Hochtemperaturofen, in der die beiden Scheibenhälften miteinander durch ein sogenanntes Zusammenkleben bzw. des Faserverbund-Werkstoffs innig miteinander verbunden werden.

Die Rippen der Luftkanäle können eine unterschiedliche Länge aufweisen, wobei erfindungsgemäß zwischen zwei durchgehenden Rippen jeweils eine kürzere Rippe vorgesehen ist. Alle Rippen weisen eine Einhakverbindung auf. Zusätzlich können in den Scheibenelementen, insbesondere in den Reibflächen, Perforierungen, wie Bohrungen und dgl., vorgesehen sein.

Ein Ausführungsbeispiel der Erfindungen ist in den Zeichnungen dargestellt und wird im folgenden näher beschrieben.

Es zeigen:
- Fig. 1: Eine schaubildliche Darstellung einer aus zwei Scheibenelementen bestehenden Bremsscheibe mit Einhakverbindung in einem unverbundenen Zustand,
- Fig. 2: eine Draufsicht auf das eine Scheibenelement,
- Fig. 3: eine Ansicht auf das andere Scheibenelement und
- Fig. 4: einen Schnitt durch die Einhakverbindung.

Eine Bremsscheibe 1 umfaßt im wesentlichen zwei Scheibenelemente 2, 3, die über eine Einhakverbindung 4 miteinander verbunden sind. Diese Verbindung 4 ist in den jeweiligen Rippen 5, 6 der beiden Scheibenelemente 2, 3 vorgesehen.

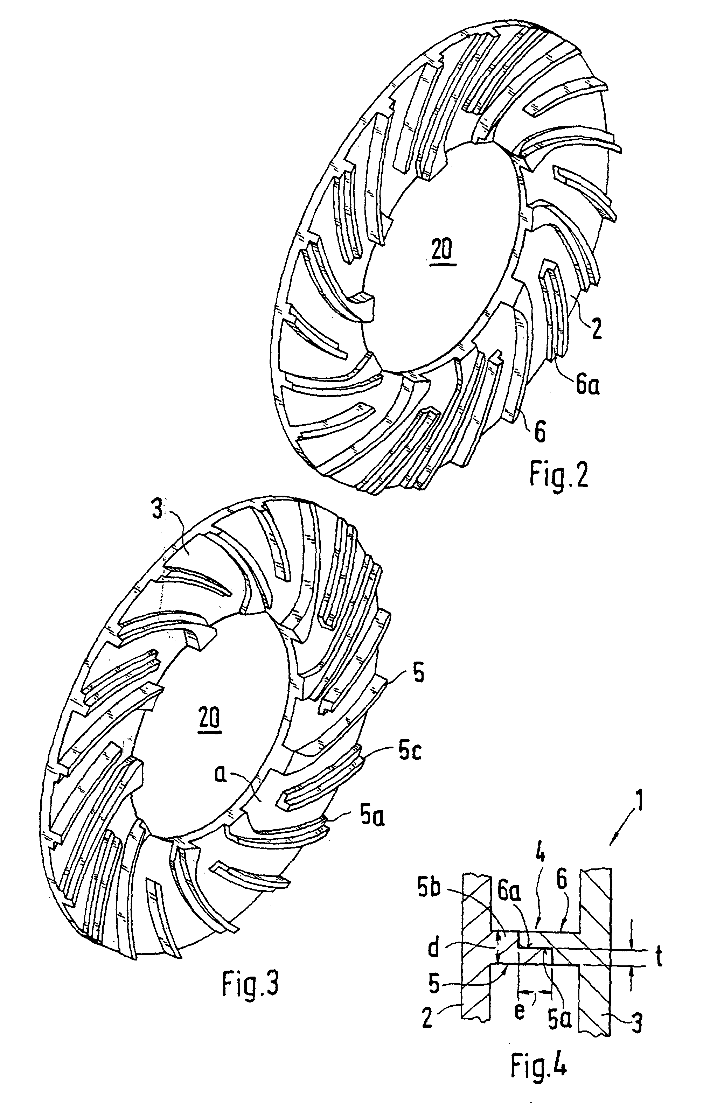

Die Scheibenelemente 2 und 3 weisen eine Vielzahl von Rippen 5, 6 auf, die im verbundenen Zustand Luftkanäle bilden. Diese Rippen verlaufen vom Zentrum der Scheibenelemente 2, 3 nach außen hin. Sie sind teilweise durchgehend über die gesamte Fläche des Reibringes und teilweise verkürzt (Rippe 5c) ausgeführt, wie die Fig. 2 und 3 näher zeigen. Jede Rippe ist mit einer Einhakverbindung 4 versehen.

Die Rippen 5, 6 weisen an ihren zu verbindenden Stirnflächen jeweils eine Absetzung 5a und 6a auf, deren Flächen zum Verbinden aufeinander liegen, wie Fig. 4 näher zeigt. Diese Absetzungen können beispielsweise von Rippe zu Rippe wechselseitig angeordnet sein, so daß sich eine gewisse Fixierung der Scheibenelemente 2, 3 zueinander ergibt.

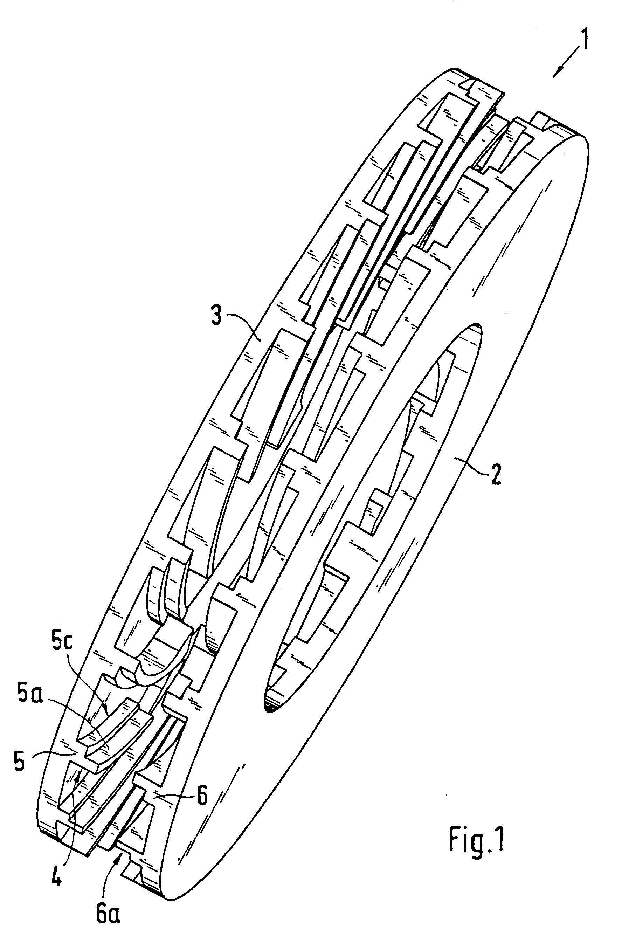

Es können, wie in Fig. 1 näher gezeigt, auch mindestens zwei folgende Rippen mit einer gleichgerichteten Absetzung versehen sein, wogegen dann Absetzungen mit entgegengesetzt ausgeführten Absetzungen anschließen.

Die Tiefe t der Absetzung 5a, 6a entspricht wenigstens der Hälfte der Dicke d der Rippe. Die Länge e der Absetzung ist so gewählt, daß ein Bereich mit der vollen Rippendicke d am Bremsscheibenring als Rippengrund 5b stehen bleibt.

Im Bereich der Rippen 5, 6, 5c können Bohrungen in der Reibfläche angeordnet sein, die sich über die gesamte Fläche regelmäßig und/oder unregelmäßig erstrecken.

## Patentansprüche

1. Bremsscheibe für ein Kraftfahrzeug, insbesondere aus einem Faserverbund-Werkstoff bestehend, die zwei Scheibenelemente mit Luftkanäle bildenden und sich annähernd radial erstreckenden Rippen umfaßt, welche miteinander verbindbar sind, **dadurch gekennzeichnet, daß** über die gesamte Länge oder einen Teilbereich der Rippen (5, 6) der Scheibenelemente (2, 3) die gegenüberstehenden Rippen-Stirnflächen miteinander über korrespondierende Absetzungen (5a, 6a) verbunden sind, die jeweils in einem Rippengrund (5b) enden und beide Absetzungen (5a, 6a) zusammen einer Dicke (d) der Rippe (5, 6) entsprechen.

2. Bremsscheibe nach Anspruch 1, **dadurch gekennzeichnet, daß** die Tiefe (t) der einen Absetzung (5a, 6a) wenigstens der Hälfte der Dicke (d) der Rippe (5, 6) entspricht.

3. Bremsscheibe nach einem oder mehreren der vorhergehenden Ansprüche, **dadurch gekennzeichnet, daß** die Absetzungen (5a, 6a) in den Rippen (5, 6) wechselnd deratig angeordnet sind, daß wenigstens einer linksseitigen Absetzung (6a) wenigstens eine rechtsseitige Absetzung (5a) folgt.

## Claims

1. A brake disc for a motor vehicle, in particular comprising a fibre composite and comprising two disc members having ribs forming air channels and extending substantially radially, the disc members being connectable together, **characterised in that**, over the entire length or over a portion of the ribs (5, 6) of the disc members (2, 3), the facing front surfaces of the ribs are connected to one another by complementary offsets (5a, 6a) each ending in a rib base (5b), and both offsets (5a, 6a) together correspond to a thickness (d) of the rib (5, 6).

2. A brake disc according to claim 1, **characterised in that** the depth (t) of the one offset (5a, 6a) corresponds to at least half the thickness (d) of the rib (5, 6).

3. A brake disc according to one or more of the preceding claims, **characterised in that** the offsets (5a, 6a) in the ribs (5, 6) are alternately arranged so that at least one right-hand offset (5a) follows at least one left-hand offset (6a).

## Revendications

1. Disque de frein pour un véhicule automobile, constitué en particulier d'un matériau composite à base de fibres, qui comprend deux éléments en disque avec des nervures qui forment des canaux d'aération et qui s'étendent approximativement radialement, lesquelles nervures peuvent être reliées entre elles, **caractérisé en ce que** sur toute la longueur ou une zone partielle des nervures (5, 6) des éléments en disque (2, 3), les surfaces frontales opposées des nervures sont reliées entre elles par des retraits (5a, 6a) correspondant entre eux, qui se terminent chacun dans un fond de nervure (5b) et **en ce que** les deux retraits (5a, 6a) correspondent ensemble à une épaisseur (d) de la nervure (5, 6).

2. Disque de frein selon la revendication 1, **caractérisé en ce que** la profondeur (t) d'un retrait (5a, 6a) correspond au moins à la moitié de l'épaisseur (d) de la nervure (5, 6).

3. Disque de frein selon une ou plusieurs des revendications précédentes, **caractérisé en ce que** les retraits (5a, 6a) sont disposés alternativement dans les nervures (5, 6) de manière qu'à au moins un retrait (6a) côté gauche succède au moins un retrait (Sa) côté droit.
